# EUROPEAN PATENT APPLICATION

(11) **EP 2 169 000 A1**
(43) Date of publication of application: **31.03.2010**
(21) Application number: 08787596.9
(22) Date of filing: 06.06.2008
(51) Int. Cl.: C08J 9/04, C08L 23/12, B29C 44/00, B29C 47/00

(54) **COMPOSITION, METHOD AND UNIT FOR THE CONTINUOUS PRODUCTION OF A FOAMED POLYMER SHEET AND RESULTING SHEET**

(30) Priority: 07.06.2007 WO PCT/ES2007/000034
(71) Applicant: ULMA C y E, S. COOP., 20560 Onate (Guipuzcoa) (ES)
(72) Inventor: FABIAN MARIEZKURRENA, Aitor, E-20560 Oñate (Guipúzcoa) (ES); DE SOUSA PAIS ANTUNES, Marcelo, E-08222 Terrassa (Barcelona) (ES); VELASCO, Perero, José Ignacio, E-20560 Oñate (Guipúzcoa) (ES)
(74) Representative: Gonzalez-Alberto Rodriguez, Natalia
(86) International application number: PCT/ES2008/000415
(87) International publication number: WO 2008/148918

(57) **Abstract**

The present invention describes a process and respective installation for continuous production of foamed polymeric sheets by extrusion, another object of the invention being the development and use of polypropylene-based formulations comprising linear polypropylenes and branched polypropylenes. The installation includes four stages: a first stage of extrusion foaming, in which a foaming agent, either of a chemical or physical nature, in the latter case introduced in supercritical conditions, is mixed with the polymeric mass melted previously in the first stages of the extruder, the material expanding exactly at the outlet of the lips of the planar extrusion head; a second stage of calibration and cooling of the foamed sheet, in which the expanded plastic material is cooled by contact in a system of vacuum calibrators and by contact with water in a cooling bath; a stage of collection of the foamed panel; and a final stage of cutting of the foamed sheet, defining the final dimensions thereof.

## Description

### Field of the Invention

The present invention relates to an installation for the production of foamed thermoplastic polymeric sheets, to the process for manufacturing said sheets, as well as to the development of a new polypropylene-based formulation for continuous production of the foamed sheets by extrusion, such sheets being applicable in various fields and quite particularly in the manufacture of sandwich type shuttering panels, in which the sheets form the core of the panel.

### Background of the Invention

Foamed polymeric panels have been used in recent years in various structural applications, as described below:
Patents US 7,048,879 and US 6,399,189 develop a process for production of foamed polymeric panels by batch expansion processes as an alternative to classic wood panels. However, and despite the simplicity of the methods set forth in the previous patents, such methods are limited to small productions of foamed plastic panels for structural applications.
Patents US 6,521,675, US 6,383,425 and US 6,231,942 develop processes for continuous production of foamed polypropylene sheets with an improved surface appearance. However, the sheets thus produced have limitations insofar as the final density of the material and morphology thereof due to the high cell coalescence associated to the foaming of linear polypropylenes.

In particular, patent US 6,770,697 considers the incorporation of nanometric fillers for increasing the melt-strength of the polymeric mass and improving the final properties of the foamed sheet. However, the sheets thus produced still have considerably high final density values (> 250 kg/m³) for this type of material and for structural applications.

In relation to shuttering panels, the use of wood shuttering panels has always been very widespread in the construction sector, which panels provide multiple advantages, including that of providing a good nailability. However, wood shuttering panels have a short life due to the environment in which their activity is developed, since they are generally exposed to water, moisture, abrasive materials (cement, lime, concrete, etc.), which shortens their useful life.

In addition, once deteriorated, they must necessarily be removed and the possibilities of repairing and recycling them are complicated and, in any case, limited.

The ecological impact involved in producing millions of square meters of shuttering panels from forest wood, as occurs with all products produced from wood, is not insignificant either.

For the purpose of the durability of the panel, shuttering panels combining wood and plastic materials have been developed for a long time. This type of panel is described in patents DE 19611413, DE 19611382 and EP 1 426 525. The wood panel is generally complemented with edges and borders of plastic materials, suitably assembled or fixed to the wood core.

Likewise, processes and formulations for the production of panels formed only by plastic materials, recycled rubber or combinations of various plastic materials have been researched and developed. This technology generally attempts to fulfill a dual objective, on one hand, dispose of the large amount of plastic waste generated by the automobile industry and search for a use for such waste through its recycling for the production of panels for construction.

A process for the production of panels from recycled materials is described in patent WO 2004/111368, which allows producing a composite board based on plastic and rubber from triturated tires. A core is obtained to which structural skins are added to complete the shuttering board. The board produced by this process is quite dense and does not provide all the mechanical features required.

In addition, sandwich type isolated structural panels have been used for a long time, as described in patents US 3,305,991, US 3,555,131, US 3,838,241 and US 4,120,330. These patents develop the process for forming heat welded foams, preparing the foam inside a mold. There are many patents related to the foaming process for structural alignments such as a core of sandwich panels by continuous direct extrusion, using a physical type foaming agent. However, many of them are limited to the machinery necessary for producing the foamed panel, forgetting the formulation of the material used.

### Object of the Invention

The object of the present invention, in addition to considering a new installation and process for continuous production of foamed sheets of thermoplastic material for structural applications, is the development of new polypropylene-based compositions with higher melt-strength, particularly of mixtures of branched polypropylenes (bran-PP) and linear polypropylenes (linear-PP), enabling continuous production of the mentioned PP-based foamed sheets with a reduced density (> 250 kg/m³ and, particularly, regulating the formulation, between 250-500 kg/m³). These foamed sheets with a reduced density will particularly have a use in structural applications, for example, as foamed cores of sandwich panels for shuttering boards.

The branched polypropylenes (bran-PP) used in the present invention are chemically modified linear polymers with long branches in their chain, prepared by known chemical methods from a linear polypropylene as described for example in US 3,542,702 or in US 6,875,826, already being commercially available (for example, there are branched polypropylene grades of companies such as Borealis or Basell Polyolefins). Their particular structure further allows their recyclability.

In relation to the polypropylene with a linear structure (linear-PP) used in the present invention, it can be of any conventional virgin or recycled extrusion grade, or a mixture of both.

Bran-PP has a higher extensional and shear viscosity in the molten state than linear-PP. This is particularly important while producing the foamed sheet, since it allows the polymer to support the overall cellular structure of the foam during the stage of expansion of the gas bubbles due to a decompression effect, reducing the problems associated to the cell coalescence indicated previously and observed in the case of using linear polypropylenes for foaming applications, and ultimately enabling reaching considerably more reduced density values. The particular rheology of bran-PP allows a stable growth of the gas bubbles during the stage of expansion of the foam.

Bran-PP is mixed in the present composition with linear-PP in different proportions, depending on the expansion ratio and on the desired mechanical properties for the cell material, being re-processable due to its non-crosslinked structure.

Therefore, an object of the present invention relates to an installation for continuous production of foamed thermoplastic polymeric sheets, particularly of PP, by extrusion foaming.

Another object of the invention relates to a process for the production of said foamed sheet. The process comprises; putting in contact inside an extruder a polymeric mass (A), previously melted and homogenized, with a foaming agent (B); continuously producing the foamed sheet by extrusion; calibrating and cooling the foamed sheet; and collecting and cutting said foamed sheet.

Another object of the present invention relates to a new composition for preparing said polypropylene (PP)-based foamed sheet, and which comprises the following essential components:
a polymeric mass (A), formed by branched polypropylene (bran-PP) and linear polypropylene (linear-PP). The composition further comprises a foaming agent (B).

Finally, another aspect of the invention relates to actual foamed sheet.

### Description of the Invention

In one aspect, the present invention relates to an installation and respective process for the production of foamed polymeric sheets, particularly of polypropylene, produced continuously by extrusion foaming.

In another aspect, the present invention relates to a new composition formed by a polymeric mass (A), comprising: branched polypropylene (bran-PP) and linear polypropylene (linear-PP), for preparing foamed sheets with a closed-cell structure using a foaming agent. These foamed panels are in turn useful in various structural applications such as in cores used in the manufacture of sandwich type panels, particularly for shuttering.

The new composition, hereinafter composition of the invention, for preparing said foamed sheets includes:
(A) a polymeric mass comprising:
   - 0-70% by weight of bran-PP;
   - 30-98% by weight of virgin linear-PP, recycled linear-PP or a mixture of both;
   - 0.5-3% by weight of a nucleating agent and/or secondary foaming agent, which is not H₂O;
   - 1-10% by weight of organophilic ceramic particles, with a percentage of water less than 0.02 %;
   - 0.1-1% by weight of other process additives, and
(B) a physical or chemical foaming agent, which is not water (H₂O), in an amount comprised between 0.5 and 5% by weight.

The composition of the invention further comprises the possibility of incorporating between 0.5-3% by weight of a nucleating agent and/or secondary foaming agent which is not H₂O, facilitating the growth of gas bubbles and the crystallization process of the PP matrix.

In a particular embodiment, the nucleating agent used is talc. Talc acts as an agent for nucleating the gas bubbles during the stage of decompression of the gas dispersed in the molten polymeric mass (A), in addition to acting as a nucleating agent in the crystallization process of PP. The percentage of talc used can vary depending on the type of cell morphology and on the desired final mechanical properties. The higher the percentage of talc used the more effective will the nucleation process of the gas bubbles be, resulting in foamed materials with more reduced and uniform cell sizes.

The foamed sheet produced is characterized by having a closed-cell structure with a maximum content of open cells of 15%, particularly less than 10%, with cells with a maximum size of 0.5 mm in unimodal distribution, important for structural applications, enabling it to have a specific stiffness value greater than that of foamed sheets with an open-cell structure.

Likewise, the composition of the invention contemplates between 1-10% by weight of organophilic ceramic particles, which are characterized by having in their composition a percentage of water less than 0.02%, which act by increasing the mechanical properties of the foamed panel, particularly the stiffness thereof. In a particular embodiment, the stiffness of the foamed core can be increased by using nanoparticle precursors, particularly clays modified with an organophilic surface treatment with a smectite type layered structure, such as montmorillonite and/or hectorite. These clays, designated as cationic clays, have a crystalline structure formed by layers of aluminium octahedrons comprised between two layers formed by silicon tetrahedrons with several silanol groups in the space between layers, in which there are exchangeable cations. These layers have nominal thicknesses close to 1 nm and lengths of up to 1 µm. The aspect ratio is between 100 and 1000, with a large surface area (700-800 m²/g).

In a particular embodiment, the ceramic particles, used in 1 to 10% by weight in the composition of the invention previously set forth, are smectite type cationic clays, such as montmorillonite and/or the hectorite, superficially modified with a quaternary tetra-alkylammonium cation (referred to herein as "organophilic ceramic particles"), thus organophilizing the surface thereof, making it more compatible with not very polar polymers such as olefins, particularly polypropylene, considered in the composition of the present invention. Chemically increasing the compatibility between the surface of the layers of the clays and the polymers chains facilitates the dispersion thereof inside the polymeric matrix by melt mixing processes such as the extrusion process.

Furthermore, in the particular mixing conditions of the components of the composition of the invention, and due to the weak cohesive forces which keep the layers of the organophilic ceramic particles joined, an intercalation of the polymeric chains between the layers and, in very intense mixing conditions, a partial exfoliation thereof inside the polymeric mass (A) are achieved. This intercalation/partial exfoliation of the layers of modified clay in the polymeric mass allows producing polymeric nanocompounds, i.e., a compound in which at least one of the dimensions of the particles dispersed in the polymeric matrix is in the nanometric range (in this case the thickness). This particular situation allows a large surface area of contact between the layers of clay and the polymeric chains, locally stiffening them, resulting in a generalized improvement of the mechanical properties at macroscopic level (such as the elastic modulus and the strength), further allowing to maintain the final density of the foamed core, due to the fact that the large polymer-clay contact areas enable the use of considerably reduced mass percentages of clay (< 10 % by weight) when compared to other more conventional reinforcements or fillers.

The process for the production of the foamed sheet, which is described below, is an extrusion foaming process, in which the molten polymeric mass (A) and the foaming agent (B) are mixed. In this process, the organophilic ceramic particles can act together with the talc as a nucleating agent for generating gas bubbles during the stage of the start of the cell growth, in addition to the crystallization nucleation process of the PP matrix. These organophilic ceramic particles, dispersed and intercalated/exfoliated during the mixing, can also stiffen the cell walls during the stage of cell growth, aiding to locally increase the melt-strength of the polymeric mass and thus limiting the possible rupture thereof. Foamed sheets with specific elastic moduli, i.e., moduli relating to the density of the material, greater than 1.2 GPa.cm³/g, particularly between 1.4 and 1.5 GPa.cm³/g, can be produced with the composition of the invention comprising between 1 and 10% by weight of modified clay.

The previously organophilized clay type nanoparticles ("organophilic ceramic particles") are used to regulate the stiffness of the foamed sheets designated as foamed sheets with a low (100-200 kg/m³) and intermediate density (200-400 kg/m³).

In another particular embodiment, the organophilic ceramic particles used to increase the stiffness of the foamed sheet are modified hydrotalcite type layered double hydroxides (LDHs). LDHs, also known as anionic clays, are layered compounds with anions in the space between layers. Their structure consists of brucite type layers that are positively charged due to the partial substitution of divalent cations with other trivalent cations, the charge being counterbalanced by anions located between the layers. Hydrotalcite, a type of LDH considered in the composition of the present invention in a percentage comprised between 1 and 10% by weight, particularly has a structure formed by octahedral layers of double magnesium/aluminium hydroxides coordinated by OH⁻ groups sharing vertices with three contiguous octahedrons. The divalent ions of the layers can be substituted with other trivalent ions (Fe³⁺, Al³⁺, etc.), generating a positive charge excess which must be counterbalanced by the presence of anions (CO₃²⁻, Cl⁻, OH⁻, etc.) between the layers thereof. This type of ceramic particle has difficulty of dispersion by extrusion due to the stability provided by the presence of these anions between layers, especially carbonates (CO₃²⁻). These organophilic ceramic particles are obtained by chemical modification consisting of an anionic exchange replacing the original carbonate anions with others of a greater volume, thus increasing the space between layers and, ultimately, facilitating the dispersion of the particles inside the polymeric matrix by extrusion.

In another particular embodiment, to stiffen the foamed sheet, organophilic glass fibers, i.e., superficially modified with organofunctional silane type coupling agents, are used as ceramic particles. These fibers increase the stiffness, tenacity and the impact resistance of the foamed sheet compared to those provided by the previously indicated organophilic clays. A glass fiber with a length comprised between 0.5-10 mm (designated as short fiber) or > 10 mm (designated as long fiber) is typically used. Foamed panels with specific elastic moduli > 1.2 GPa.cm³/g, particularly between 1.2-1.5 GPa.cm³/g are thus achieved. The organophilic fibers are used as reinforcing material in the foamed sheets designated as foamed sheets with a high density (400-500 kg/m³), allowing a slight increase of the stiffness with respect to the respective fiber-free sheets (1.1-1.3 GPa.cm³/g).

In a particular embodiment, the organophilic glass fiber previously defined as long fiber is used in particular cases of production of foamed sheets with a high density (400-500 kg/m³) with special properties of high tenacity combined with stiffness, due to the difficulty inherent to the extrusion foaming process, in which successive stages of mixing can partially break the fibers.

The composition of the invention further contemplates between 0.1 and 1% by weight of process additives. Said additives are selected from colorants, lubricants and mixtures thereof. Internal lubricants reduce the effort carried out by the machine during the processing. This is particularly convenient when using high percentages of fillers or reinforcements (> 10% by weight), and especially in the case of using long glass fiber; in this latter particular case 1% of lubricant is typically used.

The composition of the invention also comprises between 0.5-5% by weight of a physical or chemical type foaming agent (B).

In a particular embodiment, the physical foaming agent is a gas, which is selected from carbon dioxide, nitrogen, n-butane, n-heptane and mixtures thereof, depending on the desired final properties for the foamed sheet. The gas is introduced, as will be described below, during the process for the production of the foamed sheet by extrusion, under pressure and in supercritical conditions in the corresponding areas of gas inlets in the extruder.

Chemical foaming agents are **characterized in that**, unlike physical foaming agents, they break down thermally inside the extruder, releasing gas or gases. The present invention contemplates the use of chemical foaming agents (from 0.5 to 5% by weight), both exothermic foaming agents, such as for example azodicarbonamide which, at a certain temperature and for a certain time, breaks down thermally releasing N₂ and other gases; and endothermic foaming agents, such as for example those of the sodium bicarbonate type. Depending on the percentage of chemical foaming agent used, foamed sheets with an intermediate and high density comprised between 300 and 500 kg/m³ can be achieved.

Furthermore, the present invention also contemplates the possibility of using expandable polymeric microspheres, formed by a wall of a thermoplastic material and internally by a gas. When heated, the pressure of the gas present therein is increased, while at the same time the polymeric wall is softened, favoring the expansion of such microspheres. In these cases, the present invention contemplates the use of 3-5% by weight of this type of foaming agent, allowing reaching final densities of 300-500 kg/m³ for the extruded foamed sheets.

The amount of both the physical and the chemical foaming agent is regulated according to the final features desired for the foamed panel, essentially according to the density to be obtained. In this sense, and for foamed cores with a low density (100-200 kg/m³), percentages comprised between 3 and 5% are typically used; for foamed cores with an intermediate density (200-400 kg/m³), percentages between 1 and 3% are typically used; and for cores with a high density (400-500 kg/m³), percentages comprised between 0.5-1% are typically used.

The mechanical and thermal properties of the foamed sheet can be regulated by varying the relative amounts of the previously indicated components of the composition of the invention, as well as their particular nature and the parameters of the process for production. Said properties can be regulated, for example, by varying the type and the proportion of foaming agent, which determines to a great extent the final density of the panel. Generally, the foamed sheet produced from the composition of the invention typically has a specific elastic modulus between 0.8 and 1.2 GPa.cm³/g, and with a shear modulus of about 40-100 MPa. The mechanical properties are increased with micrometric and nanometric reinforcements, specific elasticity moduli greater than 1.2 GPa.cm³/g being reached. It must be considered that the foamed panel must have at all times features allowing its use in structural applications, particularly in shuttering panels, which includes a closed-cell cellular structure, with a maximum content of open cells of 15%, particularly less than 10%, with micrometric-sized cells (typical size less than 500 microns) in a unimodal distribution. This structure is achieved by suitably regulating the parameters of the extrusion foaming process, in combination with the specific composition of the material of each sheet.

The foamed sheet produced can have variable densities, and therefore different expansion ratios (ER), defined as the ratio between the density of the polymer and that of the final foamed sheet. The density of the foamed sheet is typically comprised between 100-500 kg/m³ (ER = 1.8-9).

In a particular embodiment of the invention, the foamed sheet, designated as a foamed sheet with a low density, has a density comprised between 100-200 kg/m³ (ER = 4.5-9). The sheet has a width comprised between 250 and 2400 mm, preferably between 1000 and 1400. It also has a thickness comprised between 5 and 35 mm, particularly between 15 and 35 mm, and its length is variable.

In another particular embodiment of the invention, the foamed sheet, designated as a foamed sheet with an intermediate density, has a density comprised between 200-400 kg/m³ (ER = 2.25-4.5). The sheet has a width comprised between 250 and 2400 mm, preferably between 1000 and 1400. It can also have a thickness comprised between 5 and 35 mm, particularly between 10 and 30 mm, and its length is variable.

In another particular embodiment of the invention, the foamed sheet, designated as a foamed sheet with a high density, has a density comprised between 400-500 kg/m³ (ER = 1.8 - 2.25). The sheet has a width comprised between 250 and 2400 mm, preferably between 1000 and 1400. It can also have a thickness comprised between 5 and 35 mm, particularly between 5 and 25 mm, and its length is variable.

An illustrative example of the composition of the invention is set forth below, which is described to better understand the invention and in no case must be considered as a limitation of the scope thereof.

### Examples: Composition of the Invention

### Example 1:

- 65% of a branched PP (bran-PP) with trade name Daploy WB130HMS, of Borealis;
- 30% of a linear PP (linear-PP) indicated for extrusion applications, with trade name PP Isplen 050 G1E, of Repsol-YPF;
- 2% by weight of a PP-based talc masterbatch at 40% of talc, with trade name Isplen PM-440, of Repsol-YPF; and
- 3% of carbon dioxide as a physical foaming agent which is introduced in the extruder at a constant flow rate of 5 kg/h.

### Example 2:

- 98% of a linear PP (linear-PP) indicated for extrusion applications, with trade name PP Isplen 050 G1E, of Repsol-YPF;
- 2% of a foaming agent formed by expandable polymeric microspheres, with trade name Expancel 950 MB 120, of Akzo Nobel.

A core with a density comprised between 200 and 500 kg/m³, a specific elastic modulus between 1.0 and 1.2 GPa.cm³/g and a shear modulus between 40 and 100 MPa is produced with the formulation set forth in Example 1.

The formulation set forth in Example 2 uses expandable polymeric microspheres as a foaming agent, allowing reaching, without needing to use branched polypropylenes, foamed sheets with a density comprised between 300-500 kg/m³, with specific elastic moduli slightly less, between 0.7-1.0 GPa.cm³/g, than those reached with both CO₂ type physical foaming agents and chemical foaming agents.

The installation and respective process for the production of closed-cell PP-based foamed polymeric panels for structural applications is an object of the present invention. This installation consists of the following clearly differentiated areas;
- Extrusion foaming area
- Calibration and cooling area
- Collection area
- Cutting area

The extruder is the first stage of the installation and the material must be prepared therein for the subsequent stages of calibration and cooling and the final stages of collection and cutting, necessary for obtaining the product according to the invention.

The extruder which is used is a single-screw type extruder, with a diameter of 120 mm and with an L/D (length/diameter) ratio of 48, the screw being located inside a chamber designated as cylinder or sleeve; the screw fulfills three basic functions:
- Transport of the fed material in partially solid or softened state
- Melting of the fed material and compression thereof
- Mixing, homogenization and metering into the extrusion head for the production of foamed sheets with a variable density and thickness.

The materials involved in the process are initially placed in a hopper and introduced in the extruder through the feeding throat, which is cooled to prevent the possible formation of plastic plugs.

The sleeve is heated by means of electric resistances and the cooling is carried out by a water circuit.

The screw is initially designed to cause the compression of the plastic material in a molten state, subsequently passing to a gasification area in which gas is injected through nozzles under pressure, which is mixed with the molten plastic material. The screw then has a third stage through which, and once the plastic material has been mixed with the gas introduced under pressure therein, the mass of molten plastic and gas is again compressed, together with a homogenization and mixing of the product in a subsequent stage. The possibility of using both azodicarbonamide type chemical foaming agents and foaming agents formed by expandable polymeric microspheres is furthermore contemplated. In both cases, the foaming agent is introduced in the form of a process additive together with the polymeric materials to be processed (in the hopper), in a proportion comprised between 0.5 and 5% by weight, melted and mixed in the extruder together with the polypropylenes and other additives, the foaming being regulated by the temperatures of the different areas of the extruder.

In the event of using foaming agents formed by expandable polymeric microspheres, the foaming is achieved by abrupt heating exactly in the last areas of the extruder.

Since the present invention initially intends to use a physical type foaming agent (CO₂, N₂,...), introduced in the extruder through pressurized carboys, the subsequent description of the installation for the production of the foamed polymeric sheets by direct extrusion considers the particularities of this type of process, although in no case must it be considered as a limitation of the scope thereof.

The extrusion head is located after the screw. The head has a planar geometry, suitable for the production of extruded sheets and with a design ensuring the good homogenization of the mixture of the molten polymer with the gas, the presence of decompression areas before the mixture reaches the lips of the head, the area located exactly at the end thereof, having to be prevented.

The decompressions are usually associated to increases of the section of the cylinder of the extruder or of the extrusion head, resulting in the complete or partial growth of the gas bubbles dispersed inside the molten polymer. This complete or partial foaming inside the machine normally causes the rupture and collapse of cells due to a drawing effect, since in these areas the mixture is at a higher temperature and normally does not have a melt-strength sufficient to simultaneously withstand the growth of the bubbles and the drawing of the material.

The most relevant feature of the head proposed by the invention is that it has a T-shaped distributing channel adapted to the mentioned process of the invention and further including a restricting bar and flexible opening lips. The extrusion head has coupled thereto different electric resistances ensuring the heating of the entire material traversing it.

The head of the invention ensures the gradual increase of the pressure of the melting and thus enables a suitable control of the first stages of the expansion or foaming process of the gas dissolved in the molten mass by decompression exactly at the outlet of the lips.

The lips, together with the restricting bar located before them, are regulatable and allow controlling the pressure exerted on the molten mass and, as such, regulating the density of the final sheet together with the amount of foaming agent.

Although the process for the cooling and final stabilization of the foamed sheet is essentially achieved by the action of the vacuum contact calibrators, this head design, novel as regards the material flow distribution, ensures that the molten polymeric mass with the dissolved gas or gases, previously homogenized by the action of the extruder, reaches the outlet thereof, i.e., the area of the lips, without having foamed.

The controlled foaming, achieved exactly at the outlet of the lips of the extrusion head ensures that the sheet has a unimodal distribution of cell sizes, both in width and in thickness of the panel, as well as the suitable stabilization by the action of the contact calibrators of the cellular structure of the panel, which is intended to be a closed-cell structure.

The calibration system serves to regulate not only the final expansion ratio of the foam, but also the surface appearance of the foamed panel, necessary for placing structural skins for its application as a foamed core of sandwich panels in shuttering applications. It further consists of a calibrator formed by two sets of parallel horizontal metal plates, each with a length comprised between 500 and 1000 mm, a width between 300 and 3000 mm, particularly between 800-2500 mm, between which the contact of the extruded foamed sheet occurs. Said plates have an internal coolant circuit. The separation between the plates of this calibration system is regulated between 5 and 35 mm. It also has a bath in which the vacuum between the plates and the foamed sheet occurs.

The presence of these calibrators forms of the main novelties of the present patent, being simultaneously responsible for cooling the surface of the foamed panel and, as such, for stabilizing the cellular structure of the foam, as well as for the good surface appearance thereof.

This system also consists of a caterpillar type traction system transporting the foamed sheet at a constant speed to the final cutting system, which defines the dimensions of the foamed sheet in width and length.

### Brief Description of the Drawings

To complete the description which is being made and with the aim of aiding to better understand the features of the invention, a set of drawings is attached to the present specification as an integral part thereof, in which the following has been shown with an illustrative and nonlimiting character:
Figure 1 depicts a diagram of the production line of the PP-based foamed sheet.
Figure 2 depicts a diagram of the design of the screw and of the cooling pipe.
Figure 3 depicts in detail the gasification area and the area of the respective gas inlets in the extruder.

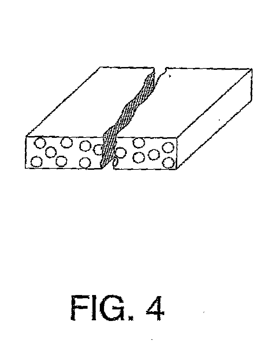

Figure 4 depicts a foamed sheet according to the invention.

### Detailed Description of a Preferred Embodiment

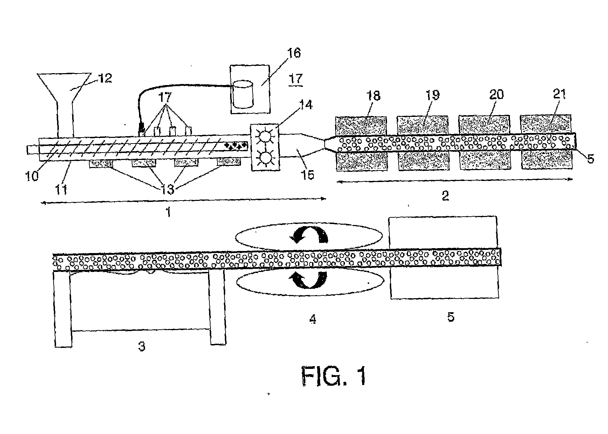

Figure 1 depicts a diagram of the production line of the PP-based foamed sheet in which the following five systems are observed:
- Extruder (1)
- Calibration system and cooling bath (2 and 3)
- Traction system (4)
- Cutting system (5)

The extruder (1) is a single-screw type extruder, the screw (10), with a diameter of 120 mm, being located inside a cylinder (11) with heating controlled by electric resistances (13) and cooled by an internal water circuit. The following three basic functions are carried out inside the screw:
- Transport of the material initially in partially solid or softened state.
- Melting of the fed material and compression thereof.
- Mixing, homogenization and metering into the planar extrusion head for the production of foamed sheets with a variable density and thickness.

The materials involved in the process are initially introduced in a feed hopper (12).

After the screw (10) and the cylinder (11) there is a gear pump (14) and after the latter, there is the extrusion head (15). This gear pump allows regulating the production, eliminating possible pressure fluctuations in the extrusion head.

The foaming agent is either introduced as a process additive together with the polymeric materials in the feed hopper (the case of chemical foaming agents or foaming agents formed by expandable polymeric microspheres) or it is introduced in the extruder from pressurized carboys (16), the case of CO₂ or N₂ type physical foaming agents, thus ensuring a supercritical fluid state and therefore the maximum solubility with the molten plastic mass. The machine preferably has four gas inlets (17) located at different points of the gasification area along the cylinder (11), allowing regulating the level of mixing with the molten polymeric mass.

The calibration system (2) serves to regulate not only the final expansion ratio of the foam, but also the surface appearance of the foamed panel, particularly in applications in which it is necessary to place structural skins on the foamed sheet. A final surface of the foamed panel which is not very rough is essential for the suitable assembly of the mentioned structural skins. The system preferably consists of four aligned planar calibrators (18), (19), (20) and (21) with the capacity to apply the vacuum, with a regulatable opening of 5 to 35 mm, the first calibrator (18), i.e., the one closest to the extrusion head (15), together with the proportion of foaming agent used, being the one regulating the final thickness of the foamed panel, whereas the other three calibrators (19), (20) and (21) regulate the final surface appearance. Together with the calibrators, this area consists of a cooling bath (3) which allows the suitable cooling of the panel (5) by direct contact with cooled water.

The traction system (4) of the foamed panel is a caterpillar type traction system, transporting the foamed sheet to the cutting system at a constant speed of 1-10 m/min.

Finally, the cutting system (5) is responsible for cutting the foamed panel in width and length according to the required and previously indicated dimensions.

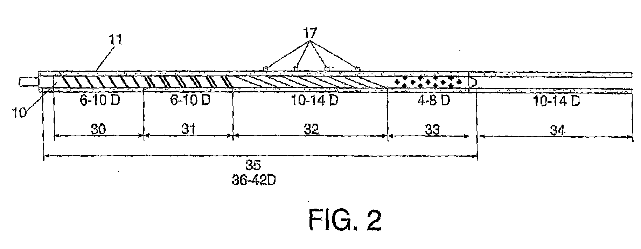

Figure 2 depicts a diagram of the design of the screw and of the cooling pipe (34). This figure shows the screw (10) and the sleeve (11), as well as the four possible gas inlets (17) in the extruder.

To describe a practical embodiment of the screw, the measurements of the various areas will be given with respect to the diameter thereof.

Thus, the length of the screw depicted in (35) particularly ranges between 36 and 42 times the diameter thereof (D = 120 mm), with a compression ratio comprised between 2 and 3 and with a cooling pipe (34), located exactly after the extrusion screw, with measurements ranging between 10 and 14 times the diameter, being the area in which the mixture of polymer and gas is pumped and cooled; this area is necessary to eliminate by the effect of the gear pump (14) the possible pressure fluctuations generated in the head and to progressively cool the processed material mass.

The screw is subdivided into four differentiated areas:
- Feeding area (30)
- Compression area (31)
- Gasification area (32)
- Metering area (33)

The feeding area (30) is responsible for transporting the softened material coming from the feed hopper (12) and can have a length ranging approximately between 6 and 10 times the diameter of the screw.

The compression area (31), in which the material is melted and compressed, has a length between 6 and 10 times the diameter of the screw, and in which one of the sections is double-threaded to increase the melting efficiency.

The gasification area (32) is the area of the screw in which the different gas inlets (17) in the sleeve of the extruder (11) are located. The length of this area also ranges between 10 and 14 times the diameter of the screw and has special dispersive and distributive mixing areas for mixing the molten material with the dispersed gas or gases, intercalated with transport areas.

Finally, the metering area (33), in which the molten material is homogenized and mixed with the gas, has a length between 4 and 8 times the diameter of the screw.

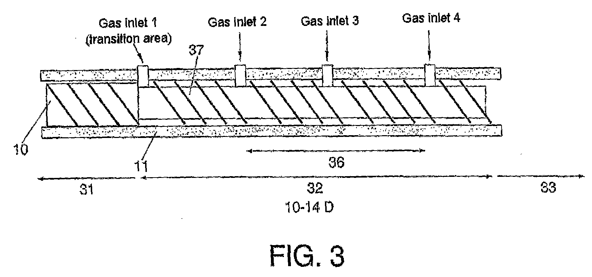

Figure 3 shows an enlarged detail of the gasification area (32). This figure highlights, in addition to the gas inlets (17), the smaller diameter of the shaft of the screw compared to the previous area, creating a larger space with respect to the walls of the sleeve (11), thus facilitating the mixing of the gas with the plastic; secondly the presence of special mixing areas (36) for mixing the molten material with the dispersed gas or gases, intercalated with transport areas (37).

The most relevant feature of the head proposed by the invention is that it has a T-shaped distributing channel adapted to the mentioned process of the invention which includes an adaptor located in the final area of the lips, with the possibility of internal cooling through a water circuit and which allows stabilizing the overall structure of the foam during the start of the state of expansion thereof at the outlet of the lips by decompression.

The lips, together with the restricting bar located before them, are regulatable and allow controlling the pressure exerted on the molten mass and, as such, regulating the density of the final sheet together with the amount of foaming agent.

Although the process for the cooling and final stabilization of the foamed sheet is essentially achieved by the action of the vacuum contact calibrators, this head design, novel as regards the material flow distribution, ensures that the molten polymeric mass with the dissolved gas or gases, previously homogenized by the action of the extruder, reaches the outlet thereof, i.e., the area of the lips, without having foamed.

The controlled foaming, achieved exactly at the outlet of the lips of the extrusion head ensures that the sheet has a unimodal distribution of cell sizes, both in width and in thickness of the panel, as well as the suitable stabilization by the action of the contact calibrators of the overall cellular structure thereof.

## Claims

1. A composition for the production by extrusion of a foamed sheet with a closed cellular structure with a maximum content of open cells of 15%, particularly less than 10%, determined according to the UNE-EN ISO 4590 standard, with cells with a maximum size of 0.5 mm in unimodal distribution, comprising:
- A dry polymeric mass (A), formed by:
- 0-70% by weight of bran-PP;
- 30-98% by weight of linear-PP;
- 0.5-3% by weight of a nucleating agent and/or a secondary foaming agent, which is not water;
- 1-10 % by weight of organophilic ceramic particles, with a percentage of water less than 0.02%;
- 0.1-1% by weight of process additives, selected from colorants, internal lubricants and mixtures thereof, and wherein the indicated percentages by weight refer to the weight with respect to the total weight of the mixture; and
- A foaming agent (B), which is not water (H₂O), in an amount comprised between 0.5 and 5% by weight.

2. The composition according to claim 1, wherein the linear-PP is virgin, recycled or a mixture of both.

3. The composition according to claim 1, wherein the nucleating agent is talc.

4. The composition according to claim 1, wherein the organophilic ceramic particles are clays with a smectite type layered structure, selected from montmorillonite and/or hectorite and wherein the latter have a percentage of moisture (H₂O) less than 0.02 %.

5. The composition according to claim 1, wherein the organophilic ceramic particles are modified hydrotalcite type layered double hydroxides (LDHs).

6. The composition according to claim 1, wherein the reinforcing organophilic ceramic particles are glass fibers.

7. The composition according to claim 6, wherein the glass fibers have a length comprised between 0.5 and 10 mm (short fibers) or greater than 10 mm (long fibers).

8. The composition according to claim 1, wherein the foaming agent (B) is of the physical type, particularly a gas selected from carbon dioxide, nitrogen, n-butane, n-heptane and mixtures thereof, or of the chemical type, particularly of the azodicarbonamide type.

9. The composition according to claim 1, wherein the foaming agent (B) is formed by expandable polymeric microspheres, particularly by hollow microspheres in which a gas is encapsulated by a polymeric wall.

10. A use of the composition according to any of claims 1 to 9 in the preparation of a foamed sheet by direct extrusion and a process for the production of said sheet comprising the following stages:
- Putting in contact in an extruder the previously melted polymeric mass (A) with the foaming agent (B) and other components of the formulation; producing the foamed sheet by extrusion; calibrating the foamed sheet; cooling the foamed sheet; and drawing the foamed sheet.

11. The process according to claim 10, wherein the stage of extrusion comprises:
a) Feeding the components of the polymeric mass (A) and the other components of the mixture into an extruder;
b) Melting and compressing the polymeric mass (A);
c) Introducing the physical foaming agent and mixing with the molten polymeric mass obtained in the previous stage b);
d) Compressing and homogenizing the mixture of the polymeric mass and dissolved gas obtained in the previous stage c);
e) Metering the obtained mass d) into an extrusion head with a planar nozzle forming the sheet;
f) Foaming the processed material exactly at the outlet of the lips of the extrusion head.

12. An installation for continuous production of a foamed polymeric sheet with the composition set forth according to any of claims 1 to 9 comprising the following areas:
- An extrusion area (1) comprising an extruder with a single screw (10) located inside a sleeve (11), further comprising a gear pump (14) regulating the production, eliminating possible pressure fluctuations and an extrusion head (15). The extrusion area (1) in turn consists of four areas in its area defined by the screw:
- feeding area (30)
- compression area (31)
- gasification area (32)
- metering area (33)
- A calibration area (2)
- A cooling area (3)
- A drawing area (4)

13. The installation for continuous production of a foamed polymeric sheet according to claim 12, **characterized in that** the feeding area (30) is the area for transporting the softened material coming from a feed hopper, having a length comprised between 6 and 10 times the diameter of the screw.

14. The installation for continuous production of a foamed polymeric sheet according to claim 12, **characterized in that** the compression area (31) responsible for melting the material coming from the feeding area (30) is double-threaded and has a length comprised between 6 and 10 times the diameter of the screw.

15. The installation for continuous production of a foamed polymeric sheet according to claim 12, **characterized in that** the gasification area (32) comprises different gas inlets (17) and has a length comprised between 10 and 14 times the diameter of the screw.

16. The installation for continuous production of a foamed polymeric sheet according to claims 12 and 15, **characterized in that** the screw in the gasification area has distributive and dispersive mixing areas intercalated with transport areas for transporting the material.

17. The installation for continuous production of a foamed polymeric sheet according to claim 12, **characterized in that** the metering area (33), in which the molten polymeric material is mixed with the dissolved gas or gases, has a length between 4 and 8 times the diameter of the screw.

18. The installation for continuous production of a foamed polymeric sheet according to claim 12, **characterized in that** the extrusion head (15) is a head with a T-shaped distributing channel ensuring a good distribution of the material flow and a growing increase of the pressure inside the extruder.

19. The installation for continuous production of a foamed polymeric sheet according to claims 12 and 18, **characterized in that** the distributing head includes at its outlet a restricting bar (42) and flexible opening lips (43) regulating the pressure exerted on the mixture and therefore the density of the final mixture.

20. The installation for continuous production of a foamed polymeric sheet according to claim 12, **characterized in that** the calibration area (2) includes means regulating the surface appearance of the panel comprising four aligned planar calibrators with the capacity to apply the vacuum.

21. The installation for continuous production of a foamed polymeric sheet according to claim 12, **characterized in that** the first unit of the calibration system (2) includes means regulating the final thickness of the panel whereas the three subsequent ones regulate its final surface appearance.

22. A foamed sheet with the composition set forth in any of claims 1 to 9 and produced by the process according to claims 10 and 11, **characterized by** having a specific elastic modulus comprised between 0.8 and 1.5 GPa.cm³/g, a shear modulus between 40 and 100 MPa and a final thickness between 5 and 35 mm.

23. The foamed sheet with the composition set forth in any of claims 1 to 9, designated as a foamed sheet with a low density, produced according to claims 10 and 11, with a density comprised between 100-200 kg/m³, a width comprised between 250 and 2400 mm and a thickness comprised between 6 and 35 mm, particularly between 15 and 35 mm.

24. A foamed sheet with the composition set forth in any of claims 1 to 9, designated as a foamed sheet with an intermediate density, produced according to claims 10 and 11, with a density comprised between 200-400 kg/m³, a width comprised between 250 and 2400 mm and a thickness comprised between 6 and 35 mm, particularly between 10 and 30 mm.

25. A foamed sheet with the composition set forth in any of claims 1 to 9, designated as a foamed sheet with a high density, produced according to claims 10 and 11, with a density comprised between 400-500 kg/m³, a width comprised between 250 and 2400 mm and a thickness comprised between 6 and 35 mm, particularly between 5 and 25 mm.
